# FASCICULE DE BREVET EUROPEEN

(11) **EP 3 434 537 B1**
(45) Date de publication et mention de la délivrance du brevet: **15.12.2021**
(21) Numéro de dépôt: 18181806.3
(22) Date de dépôt: 05.07.2018
(51) Int. Cl.: B60S 1/38

(54) **BALAI D'ESSUIE-GLACE DE VÉHICULE**
SCHEIBENWISCHER EINES FAHRZEUGS
VEHICLE WINDSCREEN-WIPER BLADE

(30) Priorité: 26.07.2017 FR 1757085
(43) Date de publication de la demande: 30.01.2019
(73) Titulaire: Valeo Systèmes d'Essuyage, 78322 Le Mesnil Saint Denis (FR)
(72) Inventeur: MONEYRON, Patrick, 63500 ISSOIRE (FR); ESPINASSE, Philippe, 63500 ISSOIRE (FR); TERRASSE, Jean-Luc, 78322 LE MESNIL SAINT DENIS (FR); MOULEYRE, Guillaume, 63500 ISSOIRE (FR)
(74) Mandataire: Valeo Visibility

(56) Documents cités:
- WO-A1-2013/087098
- WO-A1-2013/087109
- DE-A1- 10 309 080
- DE-A1- 19 729 864
- DE-A1-102010 062 274
- DE-A1-102012 019 484
- JP-A- 2007 216 735

## Description

### DOMAINE TECHNIQUE

La présente invention concerne notamment un balai d'essuie-glace de véhicule, en particulier automobile, en particulier du type « balai plat » (soit en anglais « *flat blade* »).

### ETAT DE L'ART

Un balai d'essuie-glace du type « balai plat » comprend un corps longitudinal portant une lame d'essuyage, en général en caoutchouc, destinée à frotter contre le pare-brise d'un véhicule pour évacuer de l'eau en l'amenant en dehors du champ de vision du conducteur. Le balai comporte en outre au moins une vertèbre longitudinale qui confère un cintrage à la lame d'essuyage, de manière à favoriser l'application de cette lame sur le pare-brise. Des embouts d'extrémité sont prévus aux extrémités longitudinales du corps notamment pour le solidariser à la vertèbre et/ou à la lame,

Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

Le balai est en général déplacé depuis une position basse, dans laquelle il s'étend sensiblement horizontalement le long d'un bord inférieur du parebrise, jusqu'à une position haute, dans laquelle il s'étend le long d'un bord latéral du parebrise, et inversement. Au repos, le balai peut être situé en position basse. En variante, il peut être situé dans une position haute extrême. Dans ce dernier cas, le balai est en général destiné à être rangé dans cette position haute entre le parebrise et un capotage latéral du véhicule. Ceci permet d'améliorer l'esthétique du véhicule, le balai étant, en position haute de repos, caché par le capotage et donc non visible.

Toutefois, l'espace entre le capotage et le parebrise, dans lequel est destiné à être logé le balai, est relativement étroit et un balai d'essuie-glace doit être conçu pour autoriser son rangement au repos dans cet espace. Par ailleurs, le capotage, en général plastique, est susceptible de se déformer au cours du temps et de s'affaisser légèrement augmentant ainsi l'étroitesse de l'espace. Il existe ainsi un risque de contact entre le balai et le capotage, lorsque le balai est amené dans sa position haute de rangement sous le capotage. Ceci est d'autant plus vrai au niveau de l'extrémité longitudinale supérieure du balai lorsque ce dernier a une longueur importante. Une solution à ce problème consistant à réduire la longueur du balai ne serait pas satisfaisante car elle réduirait d'autant la surface essuyée du parebrise.

DE102012019484A1 décrit un balai d'essuie-glace de véhicule selon le préambule de la revendication 1.

L'invention propose une solution simple, efficace et économique à ce problème.

### EXPOSE DE L'INVENTION

L'invention propose un balai d'essuie-glace de véhicule, en particulier automobile, ledit balai ayant une forme générale allongée et comprenant :
- un corps longitudinal supportant un déflecteur supérieur sur au moins une partie de sa longueur,
- au moins une vertèbre longitudinale de cintrage,
- une lame longitudinale inférieure d'essuyage, et
- un premier et un second embouts d'extrémité situés respectivement aux extrémités longitudinales dudit corps, lesdits premier et second embouts étant différents et non symétriques.

Le balai est caractérisé en ce que ledit premier embout est configuré pour ne pas recevoir de portion longitudinale d'extrémité dudit déflecteur et ledit second embout est configuré pour recevoir une seconde portion longitudinale d'extrémité dudit déflecteur.

Dans le cadre de la présente invention on entend par embouts non symétriques, le fait que le second embout n'est pas image du premier embout par symétrie.

Le premier embout comporte notamment une surface supérieure sensiblement plane s'étendant sur une majeure partie de la dimension longitudinale de cet embout, sensiblement parallèlement à un plan de ladite au moins une vertèbre et depuis une extrémité libre de cet embout. Le second embout est en particulier dépourvu d'une telle surface.

L'invention propose ainsi un balai dont les embouts sont différents et ne sont pas image l'un de l'autre par symétrie. L'un des embouts, dit premier embout, est conçu pour faciliter le rangement du balai sous un capotage latéral de véhicule tel que décrit ci-dessus. Pour cela, cet embout a par exemple au moins en partie une forme aplanie en particulier du côté de son extrémité libre. Le risque de contact entre le balai et le capotage est ainsi diminué voire supprimé.

Le balai selon l'invention peut comprendre une ou plusieurs des caractéristiques suivantes, prises isolément les unes des autres ou en combinaison les unes avec les autres :
- ladite surface supérieure s'étend sur plus des 2/3 de la dimension longitudinale dudit embout,
- ladite surface supérieure s'étend sur sensiblement toute la dimension longitudinale dudit embout,
- ledit corps longitudinal comprend une découpe notamment un chanfrein au niveau de son extrémité longitudinale située du côté dudit premier embout. La découpe est en particulier réalisée de façon à ce que la hauteur du déflecteur du corps longitudinal soit sensiblement nulle à cette extrémité. La hauteur du déflecteur est mesurée à partir d'une partie centrale du corps logeant la ou les vertèbres.
- ledit chanfrein est défini par une première coupe s'étendant dans un plan incliné par rapport à un axe d'allongement dudit balai, c'est-à-dire formant un angle non nul avec ledit axe d'allongement,
- ladite découpe est définie par une première coupe s'étendant dans un plan sensiblement perpendiculaire audit axe d'allongement dudit balai,
- ledit chanfrein ou ladite découpe est défini par une seconde coupe s'étendant dans un plan sensiblement parallèle audit axe d'allongement dudit balai,
- ledit premier embout comporte un logement de réception d'extrémité longitudinale de ladite au moins une vertèbre et/ou de ladite lame, ledit logement s'étendant sur sensiblement toute la dimension longitudinale dudit embout,
- dans une variante non revendiquée, ledit premier embout comporte un logement de réception d'extrémité longitudinale de ladite vertèbre et/ou de ladite lame, ledit logement s'étendant sur une partie seulement de la dimension longitudinale dudit premier embout, et par exemple sur moins des 1/3 de cette dimension longitudinale.

La publication concerne également un embout d'extrémité pour un balai d'essuie-glace de véhicule non revendiqué, en particulier automobile, tel que décrit ci-dessus, comprenant une première portion longitudinale comportant ladite surface supérieure sensiblement plane, et une seconde portion longitudinale configurée pour recouvrir une portion longitudinale d'extrémité dudit déflecteur.

La présente invention concerne encore un ensemble comportant deux balais d'essuie-glace de véhicule, en particulier automobile, tel que décrit ci-dessus. Les deux balais d'essuie-glace sont notamment configurés pour être montés respectivement sur les côtés conducteur et passager d'un véhicule en vue de l'essuyage d'un parebrise de ce véhicule.

La présente invention concerne enfin un procédé de fabrication d'un balai d'essuie-glace de véhicule, en particulier automobile, tel que décrit ci-dessus, caractérisé en ce qu'il comprend au moins une étape de coupe du déflecteur d'un corps du balai d'essuie-glace, pour la réalisation d'une découpe, à l'une de ses extrémités longitudinales. Ladite découpe est notamment réalisée seulement à unes des extrémités longitudinales du corps.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un véhicule automobile ;
- la figure 2 est une vue schématique en perspective d'un système d'essuyage pour une vitre d'un véhicule automobile ;
- la figure 3 est une vue détaillée de la figure 2, montrant la liaison entre le balai d'essuie-glace et le bras d'entraînement ;
- la figure 4 est une vue éclatée du système de la figure 2 ;
- la figure 5 est une vue schématique en perspective d'un mode de réalisation d'un balai d'essuie-glace selon l'invention ;
- la figure 6 est une vue à plus grande échelle d'une partie de la figure 5 ;
- la figure 7 est une vue schématique en perspective d'un embout d'extrémité du balai de la figure 5 ;
- la figure 8 est une autre vue schématique en perspective du balai de la figure 5, sans l'embout d'extrémité de la figure 7 ;
- la figure 9 est une vue schématique en perspective d'une variante de réalisation d'un balai d'essuie-glace non revendiquée ;
- les figures 10a, 10b et 10c sont des vues schématiques en perspective d'un embout d'extrémité du balai de la figure 9 ; et
- la figure 11 est une autre vue schématique en perspective du balai de la figure 9, sans l'embout d'extrémité des figures 10a-10c.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

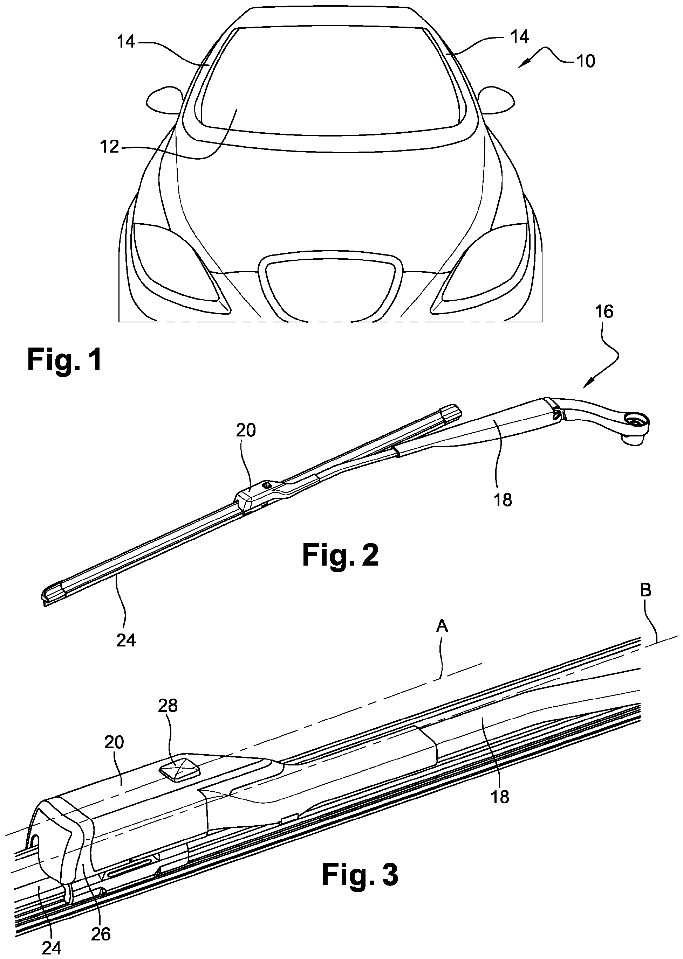

La figure 1 représente de manière schématique un véhicule automobile 10 équipé de systèmes d'essuyage d'un parebrise 12. Les systèmes d'essuyage sont au nombre de deux et sont du type de celui représenté à la figure 2.

Le parebrise 12 a une forme générale rectangulaire et comprend un bord inférieur, un bord supérieur et deux bords latéraux. Le véhicule 10 comprend des capotages latéraux 14 qui s'étendent le long des bords latéraux du parebrise 12 et à distance de ces derniers de façon à définir des espaces de rangement des systèmes d'essuyage, les rendant ainsi invisibles lorsqu'ils ne sont pas utilisés.

Dans la description qui suit, les dénominations longitudinales ou latérales se réfèrent à l'orientation d'un balai d'essuie-glace. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations haute ou basse s'apprécient par rapport au point de fixation du balai sur le bras, la dénomination intérieure correspondant à la partie où le bras et un demi-balai s'étendent.

En se référant aux figures 2 à 4, on voit un système d'essuyage 16 composé d'un bras 18 se prolongeant à son extrémité extérieure par une pièce terminale 20, qui est fixée par exemple par un sertissage sur le côté intérieur du bras 18. La pièce terminale 20 recouvre un adaptateur 22 porteur du balai 24 par l'intermédiaire d'un connecteur mécanique 26.

L'adaptateur 22 a par exemple vocation à s'insérer dans la pièce terminale 20 par un mouvement de translation selon une première direction longitudinale A de la pièce terminale 20, pour venir dans la position d'utilisation autrement appelé position de fonctionnement, où il est positionné en butée contre une forme coopérante donnée à la pièce terminale 20. Il y est alors fixé de façon réversible au moyen d'un bouton escamotable de verrouillage 28, qui coopère avec un orifice pratiqué à cet effet dans la partie supérieure de la pièce terminale. Le balai 24 s'étend longitudinalement selon une deuxième direction longitudinale référencée B.

Le balai 24 comprend ici un corps longitudinal 30, une lame d'essuyage 32, en général en caoutchouc, et au moins une vertèbre 34 qui confère un cintrage à la lame 32 de manière à favoriser l'application de cette lame sur le pare-brise.

Le corps 30 du balai 24 comporte un déflecteur supérieur 36 destiné à améliorer le fonctionnement du balai, le but de ce déflecteur étant d'améliorer le plaquage du balai sur le pare-brise et donc la performance aérodynamique du système.

Le balai 24 comprend en outre des premier et second embouts d'extrémité 38, 40 pour l'accrochage de la lame 32 et de la vertèbre 34 sur le corps 30. Ces embouts 38, 40 sont situés à chacune des extrémités longitudinales du corps 30.

Dans la technique actuelle, les embouts 38, 40 sont identiques ou similaires et comprennent en général un logement de réception de la lame 32, de la vertèbre 34, ainsi que d'une partie d'extrémité du déflecteur 36.

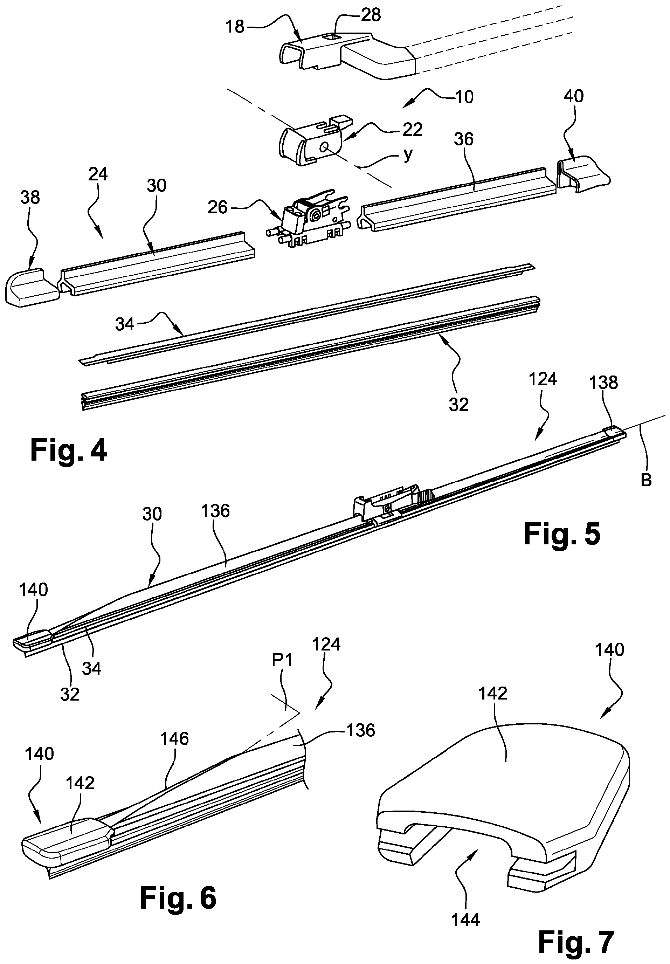

Les figures 5 à 8 représentent un premier mode de réalisation d'un balai 124 selon l'invention. Ce balai 124 est similaire à celui 24 décrit dans ce qui précède. La description ci-dessus en relation avec le balai 24 s'applique donc au balai 124, dans la mesure où elle ne contredit pas ce qui suit.

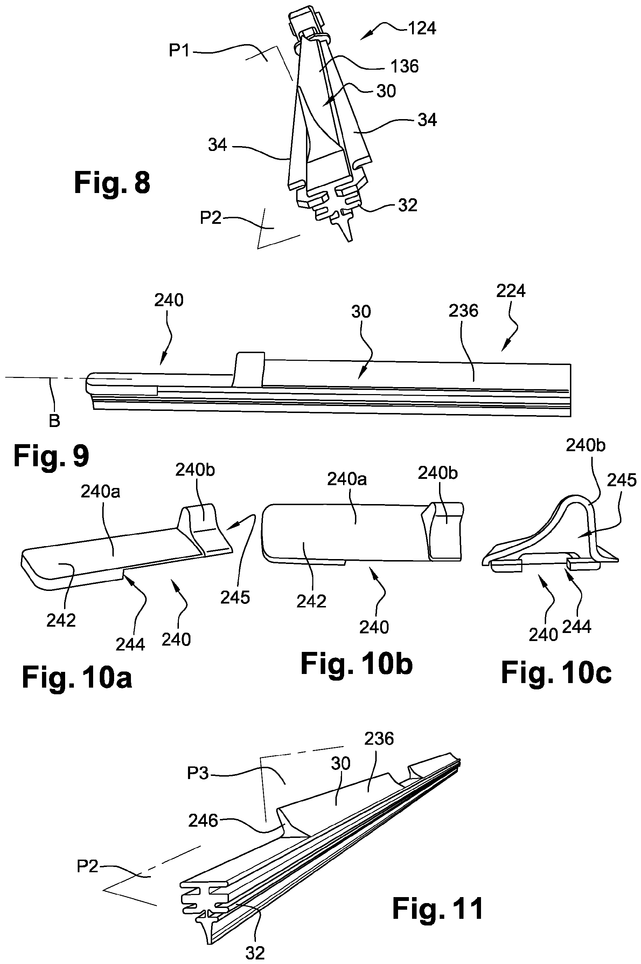

Comme illustré à la figure 8, le balai 124 comporte ici deux vertèbres 34.

Par opposition à la technique antérieure, le balai 124 comprend des premier et second embouts 138, 140 différents. Le second embout 138 est similaire à ceux 38, 40 de la technique antérieure et comprend par exemple un logement de réception de la lame 32, des vertèbres 34, ainsi que d'une partie d'extrémité du déflecteur 136.

Le premier embout 140 est notamment différent de par sa forme extérieure. Il comporte une surface supérieure 142 sensiblement plane s'étendant sur une majeure partie de la dimension longitudinale de l'embout depuis une extrémité libre de cet embout. Au contraire, le second embout 138 ne comporte pas une telle surface.

Dans l'exemple représenté, le premier embout 140 est plan ou plat, sa surface 142 s'étendant ici sensiblement sur toute sa dimension longitudinale. Le premier embout 140 a en particulier une forme générale parallélépipédique. La surface 142 est sensiblement parallèle à un plan dans lequel s'étend la vertèbre, qui est en général plane.

Le premier embout 140 comprend un logement 144 de réception de la lame 32 et de la vertèbre 34 seulement, c'est-à-dire que ce logement 144 ne reçoit pas de partie d'extrémité du déflecteur 136.

Du côté du second embout 138 et, comme c'est le cas dans la technique antérieure, le déflecteur 136 s'étend jusqu'à l'extrémité longitudinale du corps 30. Autrement dit, les extrémités longitudinales du corps 30 et du déflecteur 136 sont situées dans un même plan perpendiculaire à l'axe d'allongement B du balai. Plus particulièrement, les extrémités longitudinales du corps 30 et du déflecteur 136 ont des surfaces d'extrémité libres s'étendant dans ce même plan.

Du côté du premier embout 140, la situation est différente car le corps 30 ou déflecteur 136 est chanfreiné. Un chanfrein 146 est réalisé au niveau du déflecteur 136, par l'intermédiaire d'une première coupe effectuée dans un plan P1 incliné par rapport à l'axe d'allongement B du balai. Ce chanfrein 146 ou cette découpe est tel que la hauteur du déflecteur, c'est-à-dire que l'épaisseur restante du déflecteur 136 est minimale voire nulle du côté de l'embout 140 et maximale du côté opposé à cet embout.

Dans l'exemple représenté, le chanfrein 146 est réalisé par l'intermédiaire d'une seconde coupe effectuée dans un plan P2 parallèle à l'axe d'allongement B du balai. Ceci permet à l'embout 140 d'être monté sur le corps 30, sans que l'embout ne recouvre le déflecteur 136.

Les figures 9 à 11 représentent un second mode de réalisation d'un balai 224 non revendiqué. Ce balai 224 est similaire à celui 24 décrit dans ce qui précède. La description ci-dessus en relation avec le balai 24 s'applique donc au balai 224, dans la mesure où elle ne contredit pas ce qui suit.

Par opposition à la technique antérieure, le balai 224 comprend des premier et second embouts 240, 238 différents (dont un seul est visible dans les dessins) et non symétriques. Le second embout non visible est similaire à ceux 38, 40 de la technique antérieure et comprend par exemple un logement de réception de la lame 32, de la ou des vertèbres 34, ainsi que d'une partie d'extrémité du déflecteur 236.

Le premier embout 240 est différent de par sa forme extérieure. Il comporte une surface supérieure 242 sensiblement plane s'étendant sur une majeure partie de la dimension longitudinale de l'embout depuis une extrémité libre de cet embout. Au contraire, le second embout non visible ne comporte pas une telle surface. La surface 242 est sensiblement parallèle à un plan dans lequel s'étendent la ou les vertèbres 34, qui sont en général planes.

Dans l'exemple représenté, la surface 242 s'étend sur plus des 2/3 de la dimension longitudinale du premier embout 240. Le premier embout 240 comprend ainsi une première portion longitudinale 240a comportant la surface 242, cette première portion 240a étant sensiblement plane ou plate. L'embout 240 comporte en outre une seconde portion longitudinale 240b qui est configurée pour recouvrir une portion d'extrémité du déflecteur 236.

Le premier embout 240 comprend un premier logement 244 de réception de la lame 32 et de la vertèbre 34 seulement, c'est-à-dire que ce logement 244 ne reçoit pas de partie d'extrémité du déflecteur 236, et un second logement 245 de réception de la partie d'extrémité du déflecteur 236.

Du côté du second embout non visible et, comme c'est le cas dans la technique antérieure, le déflecteur 236 s'étend jusqu'à l'extrémité longitudinale du corps 30. Autrement dit, les extrémités longitudinales du corps 30 et du déflecteur 236 sont situées dans un même plan perpendiculaire à l'axe d'allongement du balai. Plus particulièrement, les extrémités longitudinales du corps 30 et du déflecteur 236 ont des surfaces d'extrémité libres s'étendant dans ce même plan.

Du côté du premier embout 240, la situation est différente car le corps 30 ou déflecteur 236 comprend une découpe 246. La découpe 246 est réalisée à l'extrémité du corps au niveau du premier embout 240, par l'intermédiaire d'une première coupe effectuée dans un plan P3 perpendiculaire à l'axe d'allongement B du balai. Cette découpe 246 ou cette coupe s'étend sensiblement sur toute l'épaisseur du déflecteur 236.

Dans l'exemple représenté, la découpe 246 est réalisée par l'intermédiaire d'une seconde coupe effectuée dans un plan P2 parallèle à l'axe d'allongement B du balai. Ceci permet à la portion 240a de l'embout 240 d'être montée sur le corps 30.

Dans les modes de réalisation décrits en référence aux figures 5 et suivantes, le déflecteur 136, 236 du corps 30 peut être obtenu par coupe d'un déflecteur 36 de la technique antérieure, selon les plans de coupe évoqués dans ce qui précède. Ainsi, l'invention propose un procédé de fabrication d'un balai comportant au moins une étape de coupe du déflecteur pour la réalisation d'une découpe 246 ou d'un chanfrein 146, à l'une de ses extrémités longitudinales pour coopérer avec le premier embout. Ladite découpe est notamment réalisée à l'une de ses extrémités longitudinales seulement du déflecteur.

De façon non limitative, les exemples illustrés de l'invention comportent deux vertèbres 34.

La lame 32 et le corps 30 comportant déflecteur 36 forment notamment une seule pièce, étant par exemple co-extrudés.

De même l'invention peut être mise en œuvre pour un véhicule comprenant des capotages de rangement des balais qui s'étendent le long du bord inférieur ou supérieur du pare-brise 12 du véhicule.

## Revendications

1. Balai d'essuie-glace (124) de véhicule, en particulier automobile, ledit balai ayant une forme générale allongée et comprenant :
- un corps longitudinal (30) présentant un déflecteur supérieur (136) sur au moins une partie de sa longueur,
- au moins une vertèbre longitudinale (34) de cintrage,
- une lame longitudinale (32) inférieure d'essuyage, et
- un premier et un second embouts d'extrémité (138, 140) situés respectivement aux extrémités longitudinales dudit corps,
lesdits premier et second embouts étant différents et non symétriques,
le balai étant **caractérisé en ce que** ledit premier embout (140) est configuré pour ne pas recevoir de portion longitudinale d'extrémité dudit déflecteur (136) et ledit second embout (138) est configuré pour recevoir une seconde portion longitudinale d'extrémité dudit déflecteur (136).

2. Balai (124) selon la revendication 1, le premier (140) embout comportant une surface supérieure (142) sensiblement plane s'étendant sur une majeure partie de la dimension longitudinale de cet embout, sensiblement parallèlement à un plan de ladite au moins une vertèbre et depuis une extrémité libre de cet embout.

3. Balai (124) selon la revendication précédente, dans lequel ladite surface supérieure (142) s'étend sur plus des 2/3 de la dimension longitudinale dudit embout, voire sur sensiblement toute la dimension longitudinale dudit embout.

4. Balai (124) selon l'une des revendications précédentes, dans lequel ledit déflecteur (136) comprend une découpe (146), voire un chanfrein (146), pour coopérer avec le premier embout (140).

5. Balai (124) selon la revendication précédente, dans lequel ladite une découpe (146) est au moins en partie définie par une première coupe s'étendant dans un plan (P1, P3) formant un angle (α) avec un axe d'allongement (B) dudit balai, voire dans un plan (P3) sensiblement perpendiculaire audit axe d'allongement (B) dudit balai.

6. Balai (124) selon la revendication 4 ou 5, dans lequel ladite découpe (146) est au moins en partie définie par une seconde coupe (P2) s'étendant dans un plan sensiblement parallèle audit axe d'allongement dudit balai.

7. Balai (124) selon l'une des revendications précédentes, dans lequel ledit premier et/ou second embout (140) comporte un logement (144) de réception des extrémités longitudinales de ladite vertèbre (34), ledit logement s'étendant notamment sur sensiblement toute la dimension longitudinale dudit premier et/ou second embout.

8. Ensemble comportant deux balais d'essuie-glace (124) de véhicule, en particulier automobile, selon l'une des revendications 1 à 7.

9. Procédé de fabrication d'un balai d'essuie-glace (124) de véhicule, en particulier automobile, selon l'une des revendications 1 à 7, **caractérisé en ce qu'**il comprend au moins une étape de coupe du déflecteur (136) d'un corps, pour la réalisation d'une découpe (146) pour coopérer avec le premier embout, à l'une de ses extrémités longitudinales.

## Patentansprüche

1. Scheibenwischerblatt (124) für ein Fahrzeug, insbesondere ein Kraftfahrzeug, wobei das Wischerblatt eine allgemein längliche Form hat und Folgendes umfasst:
- einen länglichen Körper (30), der einen oberen Spoiler (136) auf mindestens einem Teil seiner Länge aufweist,
- mindestens eine längliche Biegeleiste (34),
- eine untere längliche Wischlippe (32) und
- eine erste und eine zweite Endkappe (138, 140), die jeweils an den Längsenden des Körpers angeordnet sind,
wobei die erste und die zweite Endkappe verschieden und nicht symmetrisch sind,
**dadurch gekennzeichnet, dass** die erste Endkappe (140) dazu ausgestaltet ist, einen länglichen Endabschnitt des Spoilers (136) nicht aufzunehmen, und die zweite Endkappe (138) dazu ausgestaltet ist, einen zweiten länglichen Endabschnitt des Spoilers (136) aufzunehmen.

2. Wischerblatt (124) nach Anspruch 1, wobei die erste (140) Endkappe eine im Wesentlichen ebene obere Fläche (142) aufweist, die sich über einen Hauptteil der Längsabmessung dieser Endkappe im Wesentlichen parallel zu einer Ebene der mindestens einen Leiste und von einem freien Ende dieser Endkappe erstreckt.

3. Wischerblatt (124) nach dem vorhergehenden Anspruch, wobei sich die obere Fläche (142) über mehr als 2/3 der Längsabmessung der Endkappe, wenn nicht gar über im Wesentlichen die gesamte Längsabmessung der Endkappe erstreckt.

4. Wischerblatt (124) nach einem der vorhergehenden Ansprüche, wobei der Spoiler (136) einen Ausschnitt (146), wenn nicht sogar eine Abschrägung (146) zum Zusammenwirken mit der ersten Endkappe (140) umfasst.

5. Wischerblatt (124) nach dem vorhergehenden Anspruch, wobei der eine Ausschnitt (146) mindestens teilweise durch einen ersten Schnitt definiert ist, der sich in einer Ebene (P1, P3), die einen Winkel (α) mit einer Längsachse (B) des Wischerblatts bildet, wenn nicht sogar in einer im Wesentlichen senkrecht zu der Längsachse (B) des Wischerblatts verlaufenden Ebene (P3) erstreckt.

6. Wischerblatt (124) nach Anspruch 4 oder 5, wobei der Ausschnitt (146) mindestens teilweise durch einen zweiten Schnitt (P2) definiert ist, der sich in einer im Wesentlichen parallel zu der Längsachse des Wischblatts verlaufenden Ebene erstreckt.

7. Wischerblatt (124) nach einem der vorhergehenden Ansprüche, wobei die erste und/oder die zweite Endkappe (140) eine Aufnahme (144) zum Aufnehmen der Längsenden der Leiste (34) aufweist, wobei sich die Aufnahme insbesondere über im Wesentlichen die gesamte Längsabmessung der ersten und/oder der zweiten Endkappe erstreckt.

8. Baugruppe, aufweisend zwei Scheibenwischerblätter (124) für ein Fahrzeug, insbesondere ein Kraftfahrzeug, nach einem der Ansprüche 1 bis 7.

9. Verfahren zur Herstellung eines Scheibenwischerblatts (124) für ein Fahrzeug, insbesondere ein Kraftfahrzeug, nach einem der Ansprüche 1 bis 7, **dadurch gekennzeichnet, dass** es zur Herstellung eines Ausschnitts (146) für das Zusammenwirken mit der ersten Endkappe mindestens einen Schritt des Schneidens des Spoilers (136) aus einem Körper an einem seiner Längsenden umfasst.

## Claims

1. Vehicle, particularly motor vehicle, wiper (124), the said wiper having an elongate overall shape and comprising:
- a longitudinal body (30) having an upper spoiler (136) over at least part of its length,
- at least one longitudinal backing strip (34) for shaping,
- a longitudinal lower wiping blade (32), and
- a first and a second end piece (138, 140) situated respectively at the longitudinal ends of the said body,
the said first and second end pieces being different and nonsymmetrical, the wiper is **characterised in that** the said first end piece (140) is configured so that it does not accept a longitudinal end portion of the said spoiler (136) and the said second end piece (138) is configured to accept a second longitudinal end portion of the said spoiler (136).

2. Wiper (124) according to Claim 1, the first (140) end piece comprising a substantially planar upper surface (142) extending over the majority of the longitudinal dimension of this end piece, substantially parallel to a plane of the said at least one backing strip and from a free end of this end piece.

3. Wiper (124) according to the preceding claim, in which the said upper surface (142) extends over more than 2/3 of the longitudinal dimension of the said end piece, or even over substantially all of the longitudinal dimension of the said end piece.

4. Wiper (124) according to one of the preceding claims, in which the said spoiler (136) comprises a cutout (146) or even a chamfer (146) to collaborate with the first end piece (140).

5. Wiper (124) according to the preceding claim, in which the said one cutout (146) is at least partially defined by a first cut extending in a plane (P1, P3) that makes an angle (α) with an axis of elongation (B) of the said wiper, or even in a plane (P3) substantially perpendicular to the said axis of elongation (B) of the said wiper.

6. Wiper (124) according to Claim 4 or 5, in which the said cutout (146) is at least partially defined by a second cut (P2) extending in a plane substantially parallel to the said axis of elongation of the said wiper.

7. Wiper (124) according to one of the preceding claims, in which the said first and/or second end piece (140) comprises a housing (144) to accept longitudinal ends of the said backing strip (34), the said housing notably extending over substantially all of the longitudinal dimension of the said first and/or second end piece.

8. Assembly comprising two vehicle, particularly motor vehicle, wipers (124) according to one of Claims 1 to 7.

9. Method for manufacturing a vehicle, particularly motor vehicle, wiper (124) according to one of Claims 1 to 7, **characterized in that** it comprises at least one step of cutting the spoiler (136) of a body in order to create a cutout (146) to collaborate with the first end piece, at one of the longitudinal ends thereof.
